# EUROPEAN PATENT APPLICATION

(11) **EP 4 768 557 A1**
(43) Date of publication of application: **01.07.2026**
(21) Application number: 25227795.9
(22) Date of filing: 30.12.2025
(51) Int. Cl.: C10L 3/08

(54) **INTEGRATED PLANT FOR THE PRODUCTION OF RENEWABLE HYDROGEN AND BIOMETHANE**

(30) Priority: 30.12.2024 PT 2024119955
(71) Applicant: Oprimee - Innovation Design Engineering Solutions, Lda, 3405-155 Oliveira do Hospital (PT)
(72) Inventor: DOS SANTOS ALMEIDA NUNES, JOÃO MIGUEL, 3405-155 OLIVEIRA DO HOSPITAL (PT)
(74) Representative: Patentree

(57) **Abstract**

The present disclosure relates to an integrated plant for production of renewable hydrogen and biomethane, comprising a biomass gasification unit configured to convert organic feedstock into product gas; a methanation unit coupled to the biomass gasification unit to process product gas and produce biomethane; an electrolysis unit configured to produce renewable hydrogen from water using renewable energy sources with more energy efficiency conversion; a gas storage unit for the safe storage of biomethane and renewable hydrogen; and a control unit for optimizing energy usage, gas flow, and overall process efficiency, increasing the energy efficiency of gasification, by low and medium enthalpy energy recovery for pre-treatment biomass, wherein the biomethane and renewable hydrogen are combined in a fuel cell conversion unit to generate clean water as a by-product. The oxygen produced by electrolysis is supplied to the gasification unit, the thermal energy recovered from the internal process units is used to preheat the electrolysis feed water, and the water produced by the fuel cell conversion is recovered and reused for electrolysis, thus forming closed internal cycles of mass and energy flows. The integrated facility offers an efficient and flexible solution for the production and use of renewable hydrogen and biomethane.

## Description

### TECHNICAL FIELD

The present disclosure relates to an integrated plant for the production of renewable hydrogen and biomethane.

### BACKGROUND

Growing concern about climate change and the environmental impact caused by burning fossil fuels has led to an incessant search for renewable and sustainable energy sources. In particular, hydrogen and biomethane production have gained prominence due to their potential to replace fossil fuels in various applications, from the industrial sector to transportation and electricity production. The transition to an economy based on renewable sources depends, however, on efficient and integrated technologies that can assure the stable and safe production of these renewable gases on an industrial scale.

The production of renewable hydrogen is essential for decarbonizing several industries, particularly those that are difficult to electrify, such as heavy industry and maritime and air transport. Hydrogen can be produced in many different ways, and water electrolysis is one of the most promising options. This process involves splitting water into hydrogen and oxygen using electricity, preferably from renewable sources such as solar or wind power. However, the efficiency of electrolysis depends on water purity and the quality of the equipment used, as well as requiring specific operating conditions, such as high pressures and strict temperature and humidity control. One of the main limitations of the electrolysis process is the need for high efficiency and the ability to integrate hydrogen production with intermittent energy sources such as solar and wind power.

Biomethane production has also been a growing alternative to natural gas, especially when generated from biomass. Biomass is an abundant and renewable source, made up of plant and organic waste, which can be converted into product gas through a gasification process. Gasification is a thermochemical conversion technology that transforms organic materials into a gas rich in hydrogen (H₂), carbon monoxide (CO) and methane (CH₄). This product gas can then be refined and converted into biomethane through methanization processes, in which the reaction of hydrogen with the CO₂ present in the product gas forms more methane. The biomethane generated can then be used as a fuel to produce electricity or as a substitute for natural gas in various applications.

Although there are obvious advantages, biomass gasification and methanization still face technical challenges, including the need for specialized equipment, strict control of operating conditions and high efficiency in the conversion process. The product gas generated during gasification contains impurities, as solid particles and sulphury compounds, which can damage transportation and storage systems, requiring additional purification and treatment steps. Therefore, the gasification and methanization process must be combined with gas cleaning technologies, such as cyclones, heat exchangers and filtration systems, to guarantee the quality of the biomethane generated.

In addition, the safe storage and handling of hydrogen and biomethane are crucial aspects for the large-scale implementation of these technologies. Hydrogen, due to its high reactivity and low density, requires storage systems under high pressure, while biomethane needs to be stored under pressure and temperature-controlled conditions to avoid gas losses and guarantee its quality. Both gases must be handled in accordance with strict safety regulations, considering their inflammable nature and the risks associated with leaks and explosions. As a result, advanced pressure, temperature and leakage monitoring and control systems are required, as well as safety valves and purging systems to protect operators and installations.

These facts are disclosed in order to illustrate the technical problem addressed by the present disclosure.

### GENERAL DESCRIPTION

The present disclosure relates to an integrated plant for the production of renewable hydrogen and biomethane, based on the combined use of biomass gasification, electrolysis and fuel cell conversion, with advanced internal recovery and valorisation of oxygen, water and thermal energy.

In the integrated plant, oxygen produced as a by-product of the electrolysis unit is supplied to the biomass gasification unit as an oxidising agent. This technical coupling enables precise control of the equivalence ratio during gasification, significantly reduces dilution of the product gas by atmospheric nitrogen, increases the calorific value and overall quality of the product gas, and improves the global efficiency of the subsequent methanation stage. The directed utilisation of internally generated oxygen eliminates the need for an external oxidant supply and establishes a first closed internal loop for the valorisation of process streams within the integrated system.

The integrated plant is designed as a modular and dynamically controlled system, capable of efficiently converting biomass and renewable electricity into renewable gases and electrical energy, while minimising external energy inputs and maximising overall system efficiency and comprising:
(i) a biomass gasification unit configured to convert organic feedstock into a raw product gas comprising CO (carbon monoxide), CO₂ (carbon dioxide), H₂ (hydrogen), CH₄ (methane) and CxHy;
(ii) a gas cleaning and conditioning train configured to reduce tar, particulates and sulfur species and to adjust temperature and humidity of said raw product gas;
(iii) a methanation unit configured to convert at least CO and/or CO₂ into CH₄ by reaction with renewable hydrogen;
(iv) an electrolysis unit powered by renewable electricity and configured to produce said renewable hydrogen and an oxygen stream;
(v) a gas storage unit comprising separate storage volumes for hydrogen and biomethane; and
(vi) a control and safety unit configured to manage dynamic operation under variable renewable power,
wherein the oxygen stream from the electrolysis unit is fed to the gasification unit as an oxidant and wherein at least part of the water produced in a fuel cell conversion unit is recovered and reused as feedwater for electrolysis.

The disclosed technology relates to the field of renewable energies, specifically to systems designed for the sustainable production of renewable hydrogen and biomethane. It concerns processes that use biomass and electrolysis to produce hydrogen and biomethane, with the aim of replacing fossil fuels in various industrial applications, including energy production and transportation.

In particular, the present disclosure addresses the need for improved integration between hydrogen production, biomethane production and energy conversion units, overcoming current limitations related to high electrical consumption of electrolysis systems, thermal losses in gasification processes and inefficient utilisation of by-products.

A key aspect of the present disclosure lies in the functional integration of the electrolysis unit with the gasification process, wherein oxygen produced as a by-product of water electrolysis is supplied to the biomass gasification unit as an oxidising agent. This configuration enables precise control of the gasification reaction, reduces nitrogen dilution of the product gas and improves its calorific value and suitability for downstream methanation.

Another essential aspect of the present disclosure is the direct valorisation of internally recovered thermal energy to improve electrolysis efficiency, addressing one of the main technical challenges of current hydrogen production technologies.

To this end, the integrated plant comprises a heat recovery system configured to capture thermal energy from at least one of the following sources:
(i) cooling of the hot product gas downstream of the gasification unit;
(ii) the methanation unit; and
(iii) the fuel cell conversion unit.

The recovered thermal energy is transferred to a water preheating circuit upstream of the electrolysis unit, thereby increasing the inlet temperature of the water supplied to the electrolysis process and reducing the specific electrical energy consumption required for hydrogen production.

In addition to improving electrolysis efficiency, the present disclosure further provides for the use of thermal energy generated by the fuel cell conversion unit to preheat the biomass feedstock prior to gasification. This preheating step reduces the thermal demand of the gasification process, improves reactor stability and enhances overall conversion efficiency.

The integrated plant further incorporates a closed internal water management loop, wherein water produced as a by-product of the fuel cell conversion unit is recovered, condensed and treated, and subsequently reused as feedwater for the electrolysis unit. This configuration reduces freshwater consumption and enhances the sustainability of the system.

Another distinguishing feature of the present disclosure is the selective utilisation of both renewable hydrogen and biomethane within the fuel cell conversion unit, allowing flexible energy conversion strategies depending on operating conditions, energy demand and availability of renewable electricity.

The central control unit is configured to dynamically manage gas flows, thermal integration, electrical energy production and storage, enabling the plant to operate in multiple modes, including hydrogen-priority mode, biomethane-priority mode, electricity generation mode and gas storage mode.

The modular architecture of the integrated plant allows independent operation, scaling and maintenance of individual functional units, while the dynamic control strategy ensures stable and efficient operation under variable renewable energy supply conditions.

Through the combined implementation of oxygen valorisation, directed heat recovery for electrolysis efficiency improvement, biomass preheating using fuel cell thermal energy, closed water recycling and dynamic operational control, the integrated plant achieves a highly efficient, flexible and sustainable solution for the production and utilisation of renewable hydrogen and biomethane.

The integrated plant therefore establishes multiple closed internal material and energy loops, including an oxygen utilisation loop, a thermal energy recovery loop for electrolysis efficiency enhancement, a biomass preheating loop, and a closed water recycling loop, which collectively reduce external energy demand, lower electrolysis electrical consumption, and improve overall system efficiency beyond a mere aggregation of known technologies.

The present disclosure therefore provides an integrated and synergistic system that goes beyond the simple aggregation of known technologies, introducing multiple internally coupled energy and material loops that collectively improve performance, reduce energy consumption and support the transition to low-carbon industrial and energy systems.

One of the main challenges facing many renewable product gasion plants is the efficient integration of these technologies into existing industrial processes. The ability to use sustainably generated hydrogen and biomethane in industrial facilities can represent a significant reduction in CO₂ emissions and improve energy efficiency. However, the adaptation of an existing plant to incorporate these new technologies requires not only a robust infrastructure, but also robust control systems to ensure the safe and efficient operation of the entire process.

To overcome these challenges, the present technology proposes an integrated plant that combines biomass gasification, methanation, electrolysis and gas storage technologies in a cost-efficient, safe and economical manner, designed to maximize biomethane and renewable hydrogen production while ensuring energy efficiency and minimizing environmental impacts.

In one proposed embodiment of the technology, the integrated plant for the sustainable production of renewable hydrogen and biomethane from biomass sources and electrolysis comprises three main segments: the production of biomethane; the production of renewable hydrogen; the use of these gases to generate energy.

The present technology relates to an integrated and sustainable system for the sustainable production of renewable hydrogen and biomethane from biomass sources and electrolysis, aiming to replace fossil fuels in industrial and power generation processes.

The integrated plant for the sustainable production of renewable hydrogen and biomethane from biomass sources and electrolysis aims to improve the efficiency, safety and sustainability of the processes involved, while minimizing environmental impacts.

The integrated plant for the sustainable production of renewable hydrogen and biomethane from biomass sources and electrolysis consists of three main segments.

An aspect of the disclosure relates to an integrated plant for production of renewable hydrogen and biomethane, comprising: a biomass gasification unit configured to convert organic feedstock into a raw product gas; a gas cleaning and conditioning unit arranged downstream of the biomass gasification unit; a methanation unit coupled to the biomass gasification unit configured to convert at least CO and/or CO₂ of the product gas into biomethane by reaction with renewable hydrogen; an electrolysis unit powered by renewable electrical energy and configured to produce renewable hydrogen and oxygen from water using renewable energy sources; a fuel cell conversion unit configured to convert renewable hydrogen into electrical energy while producing water and thermal energy; a gas storage unit for the safe storage of biomethane and renewable hydrogen; and a control unit for optimizing energy usage, gas flow, and overall process efficiency, wherein the oxygen stream produced by the electrolysis unit is supplied to the biomass gasification unit as an oxidising agent to control the gasification equivalence ratio and reduce nitrogen dilution of the product gas; the integrated plant comprises a heat recovery system configured to recover thermal energy from at least one of: cooling of the product gas downstream of the gasification unit, the methanation unit, and the fuel cell conversion unit, and to transfer the recovered thermal energy to a water preheating circuit upstream of the electrolysis unit and biomass pretreatment (to reduce the water content and increase the energy efficiency, in particular the use of low energy enthalpy); and water produced as a by-product of the fuel cell conversion unit is recovered, treated and reused as feedwater for the electrolysis unit, thereby forming a closed internal water recycling loop; a control unit configured to manage gas flows, thermal integration and operating modes of the plant.

### BRIEF DESCRIPTION OF THE DRAWINGS

The following figures provide preferred embodiments for illustrating the disclosure and should not be seen as limiting the scope of invention.

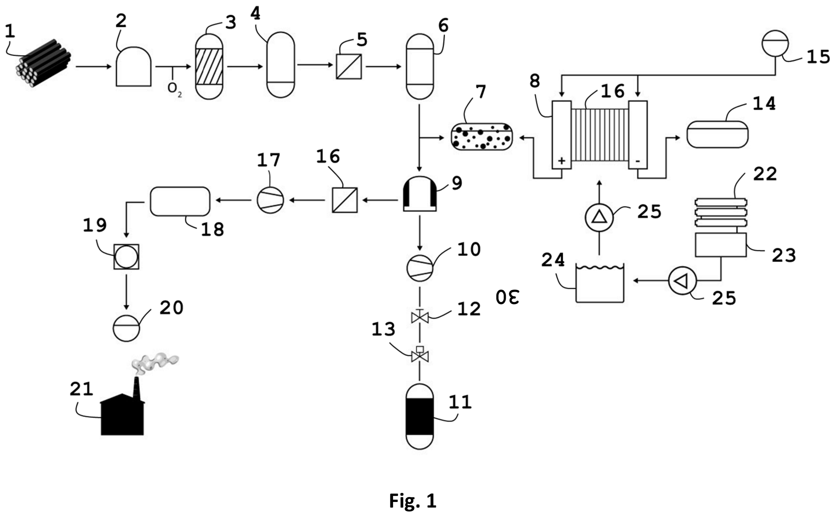

Figure 1: Schematic representation of an integrated plant for the production of renewable hydrogen and biomethane, showing internal recovery and valorisation of oxygen, water and thermal energy, including heat recovery from product gas cooling for preheating electrolysis feedwater, recovery of thermal energy from the fuel cell for biomass preheating, and closed-loop water reuse from the fuel cell to the electrolysis unit, under dynamic control by a central control unit, wherein
**(1)** represents a biomass feedstock
**(2)** represents a biomass gasification unit.
**(3)** represents a product gas (syngas).
**(4)** represents a gas cleaning and conditioning unit.
**(5)** represents a product gas cooling and heat recovery section.
**(6)** represents a methanation unit.
**(7)** represents renewable hydrogen.
**(8)** represents an electrolysis unit.
**(9)** represents biomethane.
**(10)** represents a gas compression unit.
**(11)** represents a biomethane storage unit.
**(12)** represents a manual valve control system.
**(13)** represents a solenoid valve system.
**(14)** represents oxygen.
**(15)** represents an electrical power supply unit.
**(16)** represents an electrolysis stack.
**(17)** represents a hydrogen compressor.
**(18)** represents a fuel cell conversion unit.
**(19)** represents a DC/AC inverter.
**(20)** represents an alternating current (AC) output.
**(21)** represents an electrical load or grid connection.
**(22)** represents a reverse osmosis unit.
**(23)** represents an electrodeionization unit.
**(24)** represents a treated water storage reservoir.
**(25)** represents one or more water circulation pumps.
**(30)** represents a gas filtration or polishing unit for hydrogen or product gas.

### DETAILED DESCRIPTION

**Figure 1** schematically illustrates an embodiment of an integrated plant for the production of renewable hydrogen and biomethane, showing the functional interconnection between a biomass gasification unit, an electrolysis unit, a methanation unit and a fuel cell conversion unit, together with internal recovery and valorisation of oxygen, water and thermal energy, under centralised control and a modular system architecture.

As shown, the biomass feedstock (1), which may comprise plant biomass residues and other organic waste, is supplied to a biomass gasification unit (2), wherein it is converted into a product gas (3). The gasification unit (2) is supplied with oxygen (14) originating from the electrolysis unit (8). The oxygen stream is intentionally and functionally used as an oxidising reagent for the gasification reaction, rather than being treated as a residual by-product, thereby enabling control of the gasification equivalence ratio, reducing nitrogen dilution and improving the calorific value of the product gas.

The hot product gas (3) is routed through a gas cleaning and conditioning unit (4) and subsequently to a product gas cooling and heat recovery section (5). Thermal energy recovered during cooling of the product gas is transferred via a thermal energy recovery line to a water preheating heat exchanger located upstream of the electrolysis unit (8). Preheating of the electrolysis feedwater increases its inlet temperature and explicitly reduces the specific electrical energy consumption of the electrolysis process, thereby improving the overall electrical efficiency of renewable hydrogen production.

The electrolysis unit (8), which may comprise an alkaline, PEM or solid oxide electrolysis system, produces renewable hydrogen (7) and oxygen (14) when supplied with treated water and electrical energy from an electrical power supply unit (15). Renewable hydrogen (7) is directed to a methanation unit (6), where it reacts with carbon-containing components of the product gas to form biomethane (9). The biomethane (9) is subsequently compressed by a gas compression unit (10) and stored in a biomethane storage unit (11) equipped with manual valve control systems (12) and solenoid valve systems (13).

As further illustrated, renewable hydrogen (7) and biomethane (9) are selectively or jointly supplied to a fuel cell conversion unit (18). Within the fuel cell conversion unit (18), the gases are electrochemically converted into electrical energy, which is delivered through a DC/AC inverter (19) as alternating current output (20) to an electrical load or grid connection (21).

The fuel cell conversion unit (18) further generates thermal energy and water as by-products. Thermal energy recovered from the fuel cell is transferred via a thermal energy recovery line to a biomass preheating unit arranged upstream of the gasification unit (2), thereby reducing the thermal demand of the gasification process and enhancing reactor stability and overall conversion efficiency. Water produced by the fuel cell conversion unit (18) is recovered and routed through a reverse osmosis unit (22) and an electrodeionisation unit (23), stored in a treated water storage reservoir (24) and circulated by water circulation pumps (25) back to the electrolysis unit (8), thereby establishing a closed internal water recycling loop.

All functional units of the integrated plant are supervised by a central control unit configured to dynamically manage gas flows, thermal integration, electrical energy generation and storage, and to enable modular and flexible operation of the plant under varying renewable energy availability and demand conditions.

Safety systems are integrated throughout the plant, including pressure relief devices, gas detection systems, purge systems and automated shutdown logic, ensuring safe handling of hydrogen and biomethane under all operating conditions.

In an embodiment, the integrated plant further comprises a receiving and storage silo for organic feedstock, where the biomass is stored in a controlled environment prior to processing.

In an embodiment, the biomass gasification unit of the integrated plant comprises a fluidized reactor and/or a downdraft and/or an entrained flow gasifier, configured to operate under controlled temperature and pressure conditions to ensure stable production of product gas.

The hot product gas exiting the gasification unit is directed to a gas cooling and conditioning section, wherein particulates, tar and sulphur compounds are removed through one or more cleaning stages selected from cyclones, filters, scrubbers and catalytic units.

In an embodiment, the methanation unit of the integrated plant comprises a catalytic methanation reactor for converting product gas components into biomethane, by reaction with renewable hydrogen supplied from the electrolysis unit.

The methanation unit operates under controlled temperature and pressure conditions, and thermal energy generated during the methanation reaction may be recovered and transferred to the water preheating circuit upstream of the electrolysis unit and/or to other internal heat demand points.

The biomethane produced in the methanation unit is subsequently compressed and stored in dedicated storage vessels, separated from hydrogen storage volumes to prevent cross-contamination.

The electrolysis unit comprises a water treatment section including reverse osmosis and electrodeionisation units, ensuring that feedwater purity meets the operational requirements of the electrolysis process.

In an embodiment, hydrogen produced by the electrolysis unit is filtered, compressed and either stored in dedicated hydrogen storage vessels, supplied to the methanation unit, or directed to the fuel cell conversion unit depending on operational requirements.

The oxygen produced by the electrolysis unit is supplied to the biomass gasification unit as an oxidising agent, thereby establishing an internal material integration loop that improves process efficiency and reduces the need for external oxygen supply.

In an embodiment, the control unit of the integrated plant comprises sensors, valves, and controllers configured to monitor and adjust pressure, temperature, and gas composition within the plant, guaranteeing both the purity of the gases produced and their operational safety.

In an embodiment, the integrated plant further comprises a heat recovery unit that captures waste heat generated during gasification and methanation for use in other parts of the plant, for better results.

In an embodiment, the product gas produced by the gasification unit of the integrated plant is purified prior to methanation to remove contaminants such as tar, sulfur, and particulates, for better results.

In an embodiment, the gas storage unit of the integrated plant comprises separate storage chambers for biomethane and hydrogen to prevent cross-contamination.

In an embodiment, the gas storage unit of the integrated comprises valve control systems and /or solenoid valves, for better results.

In an embodiment, the integrated plant is further distinguished by providing the integrated use of renewable hydrogen and biomethane within a fuel cell conversion unit, under dynamic control and within a modular system architecture. The integrated plant is configured such that both renewable hydrogen and biomethane produced within the plant may be selectively supplied to the fuel cell conversion unit under the supervision of a central control system. This configuration enables flexible valorisation of the produced gases, high-efficiency direct conversion into electrical energy, and the simultaneous generation of reusable water and recoverable thermal energy, while allowing dynamic adaptation to renewable energy production profiles, gas storage states and energy demand. The modular architecture further allows the system to be operated in different operating modes, including a hydrogen-priority mode, a biomethane-priority mode, an electricity generation mode and a gas storage mode.

In an embodiment, the integrated plant provides an integrated water management loop in which water generated during electrochemical conversion is recovered and reused. Water produced as a by-product of the fuel cell conversion unit is recovered, condensed and treated, and is subsequently reused as feedwater for the electrolysis unit. This closed water cycle reduces the consumption of fresh water, enhances the overall sustainability of the system, ensures high feedwater purity following treatment by reverse osmosis and electrodeionisation, and further reinforces material integration between gas production and gas utilisation within the integrated plant.

In an embodiment, water produced by the fuel cell conversion unit is recovered, condensed and treated, and subsequently reused as feedwater for the electrolysis unit, thereby forming a closed internal water loop that reduces freshwater consumption and enhances system sustainability.

A central aspect of the integrated plant lies in the directed utilisation of internally generated residual heat to preheat the feedwater supplied to the electrolysis unit, thereby directly addressing one of the main technological constraints of current hydrogen production technologies, namely high electrical energy consumption. The integrated plant comprises a heat recovery system configured to capture thermal energy from at least one of: (i) a product gas cooling section downstream of the biomass gasification unit, (ii) the methanation unit, and/or (iii) the fuel cell conversion unit, wherein the recovered thermal energy is transferred to a water preheating circuit located upstream of the electrolysis unit.

Preheating the electrolysis feedwater reduces the specific electrical energy required for electrochemical dissociation, improves the overall electrical efficiency of the electrolysis unit, lowers the levelised cost of hydrogen, and enhances the industrial competitiveness of the integrated system.

Additionally, thermal energy generated during operation of the fuel cell conversion unit, which is traditionally dissipated in conventional systems, is deliberately valorised within the biomass preparation process. In a preferred embodiment, thermal energy generated by the fuel cell conversion unit is used to preheat the biomass feedstock prior to its introduction into the gasification unit. Preheating the biomass feedstock reduces the energy required to initiate and sustain the gasification reaction, improves thermal stability of the gasification reactor, increases the conversion efficiency of the product gas, and reduces overall energy losses within the integrated system. This secondary thermal utilisation of the fuel cell establishes an energy cascade between electrochemical conversion and thermochemical conversion that is absent from the state of the art.

In a preferred embodiment, thermal energy generated by the fuel cell conversion unit is recovered and transferred to a biomass preheating unit located upstream of the gasification unit.

The preheating of the biomass feedstock reduces the thermal energy required to initiate and sustain the gasification reaction, improves reactor stability and increases overall gasification efficiency.

The integrated plant therefore comprises multiple internal energy recovery loops, including:
(i) recovery of thermal energy from product gas cooling for preheating electrolysis feedwater;
(ii) recovery of thermal energy from methanation for internal heat demands; and
(iii) recovery of thermal energy from the fuel cell for both biomass preheating and water preheating.

All functional units of the integrated plant are supervised by a central control unit comprising sensors, valves, actuators and programmable logic controllers configured to monitor and adjust pressure, temperature, flow rates and gas composition throughout the plant.

The control unit is configured to operate the integrated plant in a plurality of operating modes, including hydrogen-priority mode, biomethane-priority mode, electricity generation mode and gas storage mode, allowing dynamic adaptation to renewable electricity availability, gas demand and storage capacity.

The modular architecture of the integrated plant allows individual functional units to be operated, scaled or maintained independently, while preserving overall system integration and performance.

The integrated plant provides a synergistic and efficient solution for the production and utilisation of renewable hydrogen and biomethane, based on the coordinated integration of gasification, electrolysis, methanation and fuel cell conversion units, with internal recovery and valorisation of oxygen, thermal energy and water. The establishment of multiple closed internal material and energy loops enables reduced electrical consumption of electrolysis, improved thermal efficiency and enhanced operational flexibility compared to conventional systems.

The disclosed solution offers an effective and sustainable solution for replacing fossil fuels, with a significant impact on reducing carbon emissions. It also promotes energy efficiency and contributes to the transition to a greener economy that is less dependent on polluting energy sources.

The discloses integrated plant does not result from a mere juxtaposition of known technologies, but instead addresses concrete technical problems, including the electrical efficiency of the electrolysis process, thermal energy losses and the intermittency of renewable energy supply. It introduces an integrated, modular and dynamically controlled architecture, and delivers cumulative and verifiable technical effects, including the novel integration of biomethane and renewable hydrogen within a fuel cell conversion unit.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above-described embodiments are combinable.

The following dependent claims further set out particular embodiments of the disclosure.

## Claims

1. An integrated plant for production of renewable hydrogen and biomethane, comprising:
a biomass gasification unit configured to convert organic feedstock into a raw product gas;
a gas cleaning and conditioning unit arranged downstream of the biomass gasification unit;
a methanation unit coupled to the biomass gasification unit configured to convert at least CO and/or CO₂ of the product gas into biomethane by reaction with renewable hydrogen;
an electrolysis unit powered by renewable electrical energy and configured to produce renewable hydrogen and oxygen from water using renewable energy sources;
a fuel cell conversion unit configured to convert renewable hydrogen into electrical energy while producing water and thermal energy;
a gas storage unit for the safe storage of biomethane and renewable hydrogen; and
a control unit for optimizing energy usage, gas flow, and overall process efficiency,
wherein
the oxygen stream produced by the electrolysis unit is supplied to the biomass gasification unit as an oxidising agent to control the gasification equivalence ratio and reduce nitrogen dilution of the product gas;
the integrated plant comprises a heat recovery system configured to recover thermal energy from at least one of:
cooling of the product gas downstream of the gasification unit,
the methanation unit, and
the fuel cell conversion unit,
and to transfer the recovered thermal energy to a water preheating circuit upstream of the electrolysis unit and biomass pretreatment (to reduce the water content and increase the energy efficiency, in particular the use of low energy enthalpy); and
water produced as a by-product of the fuel cell conversion unit is recovered, treated and reused as feedwater for the electrolysis unit, thereby forming a closed internal water recycling loop;
a control unit configured to manage gas flows, thermal integration and operating modes of the plant.

2. The integrated plant according to the previous claim, further comprising a receiving and storage silo for organic feedstock.

3. The integrated plant according to any of the previous claims, wherein the biomass gasification unit comprises a fluidized reactor and/or a downdraft and/or an entrained flow gasifier.

4. The integrated plant according to any of the previous claims, wherein the methanation unit comprises:
a catalytic methanation reactor for converting product gas components into biomethane, and;
optionally, a dedicated thermal management system, configured to control the temperature of the exothermic methanation reaction, wherein
thermal management is achieved through staged reactor design, interstage cooling, heat exchangers and/or recirculation of cooled process gas, and
thermal energy recovered from the methanation unit is transferred to the water preheating circuit upstream of the electrolysis unit.

5. The integrated plant according to any of the previous claims, wherein the electrolysis unit comprises alkaline electrolysis, proton exchange membrane (PEM) electrolysis, or solid oxide electrolysis.

6. The integrated plant according to any of the previous claims, wherein
the control unit comprises sensors, valves, and controllers configured to monitor and adjust pressure, temperature, and gas composition within the plant; and
the control unit is further configured to operate the plant in at least two modes selected from a hydrogen-priority mode, a biomethane-priority mode and a power-generation mode.

7. The integrated plant according to any of the previous claims, further comprising a heat recovery unit, configured to recover waste heat from the biomass gasification unit and/or the methanation unit and to use the recovered heat to preheat biomass feedstock and/or maintain the methanation reactor within a target temperature window.

8. The integrated plant according to any of the previous claims, wherein
the product gas produced by the gasification unit is purified prior to methanation to remove contaminants such as tar, sulfur, and particulates; and
the oxygen produced by the electrolysis unit is supplied to the biomass gasification unit to control equivalence ratio and reduce nitrogen dilution of the product gas, thereby increasing the calorific value and methane yield of the product gas.

9. The integrated plant according to any of the previous claims, wherein
the gas storage unit comprises separate storage chambers for biomethane and hydrogen to prevent cross-contamination and valve control systems and/or solenoid valves; and
the hydrogen and biomethane are compressed to standardised pressure levels suitable for storage, grid injection or fuel cell supply, preferably to pressure levels selected from:
30, 200, 350 and 700 bar for hydrogen; and
10 and 250 bar for biomethane.

10. The integrated plant according to any of the previous claims, wherein water generated by the fuel cell conversion unit is condensed, purified and recycled to a water treatment unit upstream of the electrolysis unit for reuse as electrolysis feedwater, the water purification unit comprising at least one particulate filter, one reverse osmosis unit and one electrodeionisation unit.

11. The integrated plant according to any of the previous claims, comprising a gas mixing system upstream of the methanation unit configured to homogenise renewable hydrogen and carbon dioxide-containing product gas prior to methanation, wherein the gas mixing system comprises static mixers, dynamic mixers and/or multi-inlet mixing manifolds configured to prevent local concentration gradients.

12. The integrated plant according to any of the previous claims, wherein
the control unit is configured to regulate the molar ratio between hydrogen and carbon dioxide supplied to the methanation unit; and
the hydrogen-to-carbon dioxide molar ratio is maintained in a range between 3.5:1 and 4.5:1, preferably close to 4:1, thereby maximising methane yield and thermal stability of the methanation reaction.

13. The integrated plant according to any of the previous claims, wherein the fuel cell conversion unit is configured to operate selectively with renewable hydrogen, biomethane or a mixture thereof, under dynamic control, thereby enabling flexible energy conversion and internal recovery of water and thermal energy.

14. The integrated plant according to any of the previous claims, further comprising a reforming unit upstream of the fuel cell conversion unit configured to convert biomethane into a hydrogen-rich reformate gas, wherein the reforming unit comprises a steam reformer, partial oxidation reformer and/or autothermal reformer.

15. The integrated plant according to any of the previous claims, further comprising one or more buffer tanks configured to store hydrogen, biomethane and/or intermediate gas streams, wherein the one or more buffer tanks are configured to decouple production and consumption rates between process units during dynamic operation.

16. The integrated plant according to any of the previous claims, comprising a safety management system, further comprising:
anti-backflow systems configured to prevent reverse gas flow between hydrogen, oxygen and methane-containing circuits; and
an oxygen purge and management system associated with the electrolysis unit configured to safely discharge oxygen not supplied to the gasification unit, wherein the anti-backflow systems comprise non-return valves, pressure-controlled isolation valves and automated shut-off devices; and
the oxygen purge and management system comprises controlled venting, dilution with inert gas and/or temporary oxygen storage.
